Europäisches Patentamt

European Patent Office

Office européen des brevets

(11) Publication number: **0 261 587 B1**

(12) **EUROPEAN PATENT SPECIFICATION**

(45) Date of publication of patent specification: **03.06.92**    (51) Int. Cl.⁵: **B64C  1/36**

(21) Application number: **87113580.2**

(22) Date of filing: **17.09.87**

(54) **Passive aerodynamic load mitigation system.**

(30) Priority: **22.09.86 US 910085**

(43) Date of publication of application:
**30.03.88 Bulletin  88/13**

(45) Publication of the grant of the patent:
**03.06.92 Bulletin  92/23**

(84) Designated Contracting States:
**DE GB IT**

(56) References cited:
**GB-A- 2 015 660        US-A- 2 081 957**
**US-A- 3 882 721        US-A- 4 188 823**
**US-A- 4 207 764        US-A- 4 372 157**

(73) Proprietor: **E-SYSTEMS INC.**
**6250 LBJ Freeway**
**Dallas Texas 75240(US)**

(72) Inventor: **Davis, James M.**
**Route 1, Box 12**
**Caddo Mills Texas 75005(US)**

(74) Representative: **UEXKÜLL & STOLBERG Paten-**
**tanwälte**
**Beselerstrasse 4**
**W-2000 Hamburg 52(DE)**

EP 0 261 587 B1

## Description

TECHNICAL FIELD

The present invention relates to apparatus for installing external electromagnetic transducers on an aircraft and more particularly to a passive aerodynamic load mitigation system for supporting such transducers in an aerodynamically-stable fashion on the aircraft.

BACKGROUND OF THE INVENTION

It is known in the prior art to house electromagnetic aircraft emitters and sensors in an aerodynamically-shaped surface or housing on the outside of an aircraft. Prior techniques for housing such devices, however, have resulted in support configurations in which the structural interface between the aircraft and the aerodynamic surface precludes relative motion between the aircraft and the base of the surface. Such "rigid" structural connection between the aircraft and the surface results in movement of the surface relative to the incident airstream in the same manner as the aircraft to which it is attached. Accordingly, during a portion of the aircraft flight envelope, a significant angle of attack exists between the (varying) plane of the airstream and the surface. Because airloads normal to the plane of the surface are often sizable, such prior art techniques for supporting external aircraft transducers may affect the aerodynamic stability of the aircraft.

Accordingly, there is a need for an improved apparatus for installing external electromagnetic transducers on an aircraft which overcomes these and other problems associated with prior art techniques.

US-A-3 882 721 discloses an air flow sensor which utilizes a swept vane for sensing changes in the airflow angle or angle of attack. The swept type vane is pivotally mounted on a shaft. The vane has its leading and trailing edge swept rearwardly and provides high torque in relation to inertia. Its pivotal movement is indicative to the angle of attack of the airflow. Pivotal movements of the vane drive the shaft which in turn operates position sensors indicating the vane orientation and direction of airflow. In this arrangement the vane itself is part of the sensing device. There are no sensors carried by the vane.

BRIEF SUMMARY OF THE INVENTION

According to the invention, a passive aerodynamic load mitigation system is provided for supporting electromagnetic transducers on an aircraft including a housing for supporting the electromagnetic transducers in an airstream and having a base portion, a top portion and first and second symmetrical sidewall portions, a tubular tip pod extending horizontally from the housing, ballast weights geometrically located on the tip pod such that dynamic inertial nodal balancing occurs, and a pivot mechanism attached to the aircraft for pivotally supporting the housing, the pivot mechanism supporting the housing in a torsionally unrestrained rotational relationship and being located with respect to the housing such that the aerodynamic center of the housing lies in a chord downstream of the pivot mechanism.

BRIEF DESCRIPTION OF THE DRAWINGS

For a more complete understanding of the present invention and the advantages thereof, reference is now made to the following Description taken in conjunction with the accompanying Drawings in which:

FIGURE 1 is a perspective view showing a passive aerodynamic load mitigation system attached to a portion of an aircraft;

FIGURE 2 is an elevation view of the passive aerodynamic load mitigation system of FIGURE 1 showing the substantially trapezoidal shape of the sidewall portions;

FIGURE 3 is a bottom view of the streamlined surface of the load mitigation system taken along lines 3-3' of FIGURE 2; and

FIGURE 4 is an elevation view of the load mitigation system of FIGURE 1 adapted according to the present invention for preventing or substantially reducing dynamic aeroelastic instability.

DETAILED DESCRIPTION

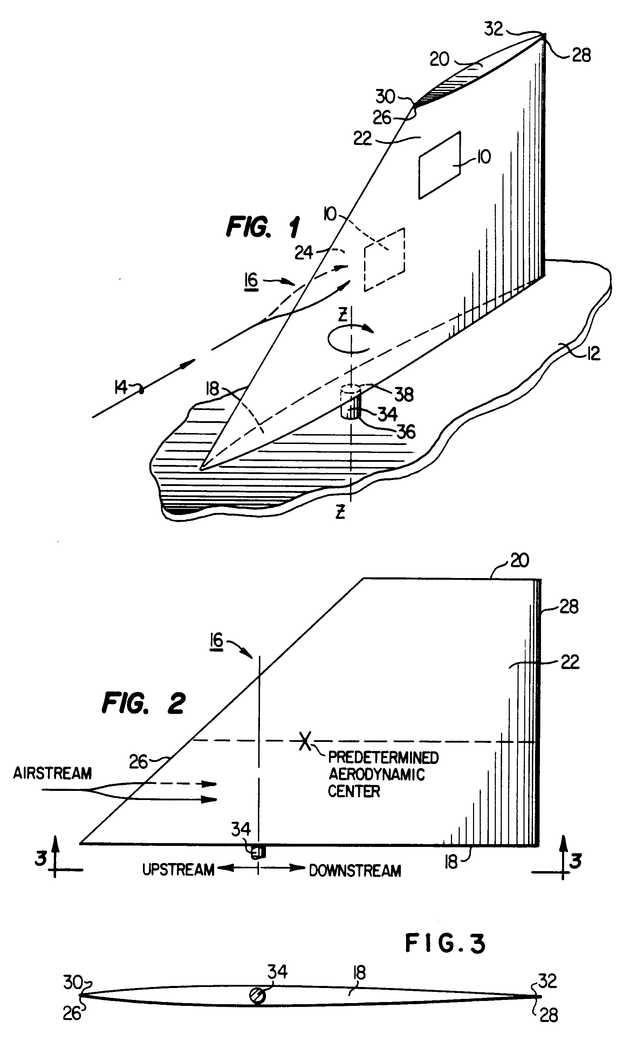

With reference now to the FIGURES wherein like reference characters designate like or similar parts throughout the several views, FIGURE 1 is a perspective view of a passive load mitigation system. The load mitigation system is designed to support one or more external electromagnetic transducers 10 on an aircraft fuselage 12 moving through an airstream 14. The transducers (i.e., electromagnetic emitters and sensors) are housed in or on an aerodynamically streamlined surface or housing 16 which is constructed and attached to the aircraft fuselage 12 in a manner to to be described.

Prior art techniques for attaching aerodynamically-shaped transducer housings have typically resulted in a "rigid" structural tie between the aircraft and the surface. Accordingly, while any positive relative motion between the base of the surface and the aircraft could be described by one or more of six components (three translational and three rotational), such prior configurations normally resulted in constraints for each of these six components. Therefore, during a portion of the aircraft flight envelope, the surface normally exhibited an undesirable, large relative "angle of attack" between the (varying) plane of the airstream and the surface.

The passive aerodynamic load mitigation system of figure 1 overcomes the disadvantages associated with prior techniques by providing a streamlined surface or housing 16 which is unrestrained in at least one of its rotational degrees of freedom as will be described. Dynamic stability is most readily achieved by maintaining the surface 16 unrestrained in just one rotational degree of freedom as will be described.

As seen in FIGURE 1, the streamlined surface 16 includes a base portion 18, a top portion 20 parallel thereto, and first and second symmetric sidewall portions 22 and 24. The first symmetric sidewall portion 22 includes a front edge 26 and a rear edge 28. Likewise, the second symmetric sidewall portion 24 includes a front edge 30 and a rear edge 32. The front edges 26 and 30 of the first and second sidewall portions 22 and 24 are joined together to ensure that the leading surface of housing 16 is aerodynamically-streamlined. Likewise, the rear edges 28 and 32 of the first and second sidewall portions 22 and 24 are also joined together. Preferably, the surface 16 comprises a fiberglass honeycomb core with a bonded fiberglass outer skin.

According to a first feature, the streamlined surface 16 is designed to dynamically align itself Parallel to the incident airstream through the use of a pivot axis 34 which supports the surface 16 on the aircraft fuselage 12. The pivot axis 34, which preferably is formed of a thick-walled hollow fiberglass or non-ferrous metallic tube, includes a first end 36 attached to the aircraft fuselage and a second end 38 embedded in the honeycomb core of the surface 16. As seen in FIGURE 1, portions of the front edges 26 and 30 of the surface 16 adjacent the fuselage 12 are located "upstream" of the pivot axis while the rear edges 28 and 32 are located "downstream" of the axis.

Although not shown in detail, it should be appreciated that the second end 38 of the pivot axis 34 is connected to the surface 16 via any suitable low friction bearing mechanism. Such a mechanism allows the surface 16 to freely pivot about a z-z rotational axis shown in FIGURE 1. If desired, the second end 38 of the pivot axis 34 may be permanently secured to the surface 16 or an integral extension thereof, in which case the first end 36 of the pivot axis 34 is rotatably-secured to the aircraft fuselage by the bearing mechanism.

Significantly, use of the pivot axis 34 allows the streamlined surface 16 to be torsionally unrestrained in the z-z rotational degree of freedom. This degree of freedom is one which allows the surface 16 to dynamically orient itself so as to always lie parallel to the plane of the airstream 14. Accordingly, because the surface is symmetrical and aligns itself parallel to the airstream, the steady state "angle of attack" of the surface 16 is always zero, regardless of the orientation of the aircraft 12 relative to the airstream. Because the steady state angle of attack is zero, net steady state airloads normal to the surface 16 are also zero. The system therefore operates to passively mitigate airloads which would otherwise adversely affect the stability of the surface and the aircraft.

According to another feature, static aeroelastic instability of the torsionally unrestrained surface 16 is avoided by selecting an aerodynamic configuration and pivot axis location as described below. Referring now to FIGURES 2 and 3, which are side elevation and bottom views, respectively, of the system of FIGURE 1, each of the first and second symmetric sidewall portions 22 and 24 of the surface 16 has a substantially trapezoidal shape. As seen in FIGURE 3, the base portion 18 preferably has a marquis-shaped structure, as does the top portion 20.

Static aeroelastic stability of the surface 16 is maintained by locating the pivot axis 34 such that a chordwise (i.e., a straight line joining the front and rear edges of the surface) location of the aerodynamic center of the surface 16 always lies downstream of the pivot axis. As is known in the art, the "aerodynamic center" of any configuration can be determined by wind tunnel tests or, alternatively, can be established accurately using aerodynamic analysis techniques such as doublet lattice theory. This latter analysis technique determines the real part of a generalized force in the rigid body pitch mode as a function of the chordwise pivot axis location. The pivot axis chordwise location at which the pitch mode generalized force vanishes then defines the aerodynamic center of the configuration. Once this predetermined aerodynamic center is located, the surface 16 is supported on the pivot axis 34 such that this center is located downstream from the axis 34.

Dynamic aeroelastic instability (flutter) could be prevented or substantially reduced by one of two preferred approaches. Flutter is a self-excited instability involving aerodynamic coupling between two or more modes of motion of the system. Classical flutter is typically caused by an energy transfer from the airstream to the structure and is manifested by violent oscillatory motion usually terminating in catastrophic structural failure. It is known in the art that the degree of overall torsional rigidity is one of the primary factors which determines the flutter speed of a lifting surface. According to one approach to prevent flutter, flutter speed onset is delayed by increasing the bending stiffness of the surface 16.

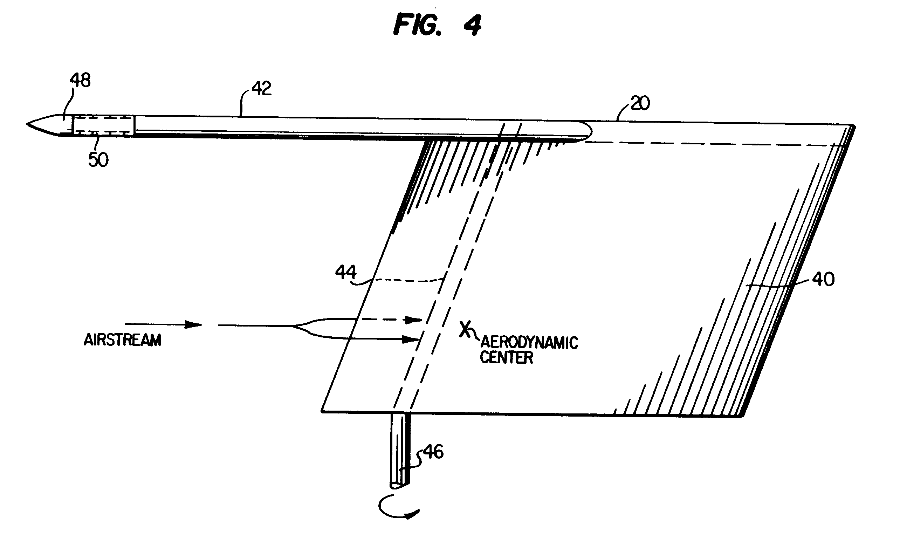

According to the invention, the approach to preventing or substantially reducing dynamic aeroelastic instability exploits the concept of nodal inertial balancing. Referring to FIGURE 4, which is a side elevational view of the system according to the invention, an aerodynamically streamlined surface 40 has a substantially parallelogram shape and incorporates a tip pod 42 structurally attached to the top surface 20 thereof. Tip pod 42 is also structurally attached to an embedded mast 44 such that the total system acts as one structural unit. A lower extension 46 of the mast 44 constitutes a pivot axis about which the system is free to rotate as described above with respect to the system disclosed in FIGURES 1-3. The pivot axis 46 is supported by a low friction bearing mechanism (not shown) located interior to the aircraft skin.

According to a feature of the invention, the tip pod 42 includes a distal end 48 which supports one or more ballast weights 50. Preferably, the ballast weights 50 are mounted interior to and substantially near the distal end 48 of the tip pod 42. The ballast weights 50 have inertial values determined by mathematical modeling procedures, such as flutter analysis, and these weights are geometrically located on the tip pod 42 such that an otherwise self-excited aeroelastic instability of the system is suppressed. Such suppression occurs as a result of dynamic inertial cross-coupling between two or more modes of motion of the system.

While the structure of FIGURE 4 is preferred, it should be appreciated that the specific structure of the tip pod and/or the location of the tip pod 42 with respect to the top portion 20 of the surface 40 are not meant to be limiting. The tip pod (or equivalent) structure may be suitably rearranged so long as the ballast weights or equivalent structure have the proper inertial values and are geometrically located on the system such that an otherwise self-excited aeroelastic instability of the system is suppressed through dynamic inertial cross-coupling between two or more modes of motion of the system.

The passive aerodynamic load mitigation system of the present invention advantageously supports external electromagnetic transducers on an aircraft in an aerodynamically stable fashion. This operation is achieved by using a streamlined surface which is torsionally unrestrained in one of its rotational degree of freedom, i.e., the degree of freedom which allows the surface to dynamically orient itself so as to always lie parallel to the plane of the airstream. Moreover, static aeroelastic stability of the surface 16 is maintained by selecting a substantially trapezoidal or parallelogram aerodynamic configuration for the sidewall portions of the surface, and by selecting a pivot axis location such that the chordwise location of the aerodynamic center of the surface always lies downstream of the pivot axis. Dynamic aeroelastic instability (flutter) is then prevented or substantially reduced by incorporating suitable ballast weights on an integral tip pod or like structure as shown in FIGURE 4. The system results in aerodynamic and structural impact on the basic aircraft which is significantly reduced as, compared to equivalent conventional installations of transducer housings on aircraft.

It should also be appreciated that the basic operating principles of the passive aerodynamic load mitigation system of the invention may also be used to support any type of transducer on a body moving through a fluid stream.

## Claims

1. A passive aerodynamic load mitigation system for supporting electromagnetic transducers (10) on an aircraft including a housing (16;40) for supporting the electromagnetic transducers in an airstream and having a base portion (18), a top portion (20) and first and second symmetrical sidewall portions (22, 24) a pivot mechanism (46) being attached to the aircraft for pivotally supporting the housing (40), the pivot mechanism supporting the housing (40) in a torsionally unrestrained rotational relationship and being located with respect to the housing (40) such that the aerodynamic centre of the housing lies in a chord downstream of the pivot mechanism (46), **characterized** by:
a tubular tip pod (42) extending horizontally from the housing (40), and
ballast weights (50) geometrically located on the tip pod (42) such that dynamic inertial nodal balancing occurs.

2. The passive aerodynamic load mitigation system as described in claim 1, **characterized** in that the tip pod (42) extends horizontally from the top portion (20) of the housing (40).

3. The passive aerodynamic load mitigation system as described in claim 1, **characterized** in that the sidewall portions (22, 24) of the housing (40) are symmetric and have a substantially paralellogram shape. (Fig.4)

4. The passive aerodynamic load mitigation system as described in claim 1, **characterized** in that the sidewall portions (22, 24) of the housing (16) are symmetric and each has a substantially trapezoidal shape. (Fig. 2)

**Revendications**

1. Système aérodynamique atténuant la pression passive pour supporter des transducteurs électromagnétiques (10) sur un avion comprenant un bâti (16 ; 40) pour supporter les transducteurs électromagnétiques dans une veine d'air et ayant une portion de base (18), une portion supérieure (20) et une première et une secondes portions de paroi latérales symétriques (22, 24), un mécanisme de pivot (46) étant fixé à l'avion pour le support pivotant du bâti (40), le mécanisme de pivot supportant le bâti (40) dans une relation de rotation non restreinte en torsion et étant situé par rapport au bâti (40) de telle manière que le centre aérodynamique du bâti se trouve dans une corde en aval du mécanisme de pivot (46), **caractérisé par :**
un fuseau de tête tubulaire (42) qui s'étend horizontalement à partir du bâti (40) et
des poids de ballast (50) situés géométriquement sur le fuseau de tête (42) de telle manière qu'un équilibrage nodal inertiel dynamique est réalisé.

2. Système aérodynamique atténuant la pression passive comme décrit dans la revendication 1, **caractérisé** en ce que le fuseau de tête (42) s'étend horizontalement à partir de la portion supérieure (20) du bâti (40).

3. Système aérodynamique atténuant la pression passive comme décrit dans la revendication 1, **caractérisé** en ce que les portions de paroi latérales (22. 24) du bâti (40) sont symétriques et ont une forme en grande partie de parallélogramme (figure 4).

4. Système aérodynamique atténuant la pression passive comme décrit dans la revendication 1, **caractérisé** en ce que les portions de paroi latérales (22, 24) du bâti (16) sont symétriques et que chacune a une forme en grande partie trapézoidale (figure 2).

**Patentansprüche**

1. Passives aerodynamisches Druckminderungssystem zur Halterung von elektromagnetischen Wandlern (10) an einem Flugzeug mit einem Gehäuse (16; 40) zum Halten der elektromagnetischen Wandler in einem Luftstrom und mit einem Basisabschnitt (18), einem Oberteil (20) und ersten und zweiten symmetrischen Seitenwandabschnitten (22, 24) und mit einem Schwenkmechanismus (46), der an dem Flugzeug angebracht ist, um das Gehäuse (40) schwenkbar zu halten, wobei der Schwenkmechanismus das Gehäuse (40) in einer torsionsmäßig unbehinderten Rotationsbeziehung hält und in bezug auf das Gehäuse derart angeordnet ist, daß das aerodynamische Zentrum des Gehäuses auf einer Linie liegt, die stromabwärts von dem Schwenkmechanismus (46) liegt, **gekennzeichnet durch:**
eine rohrförmige Spitzenhülse (42), die sich von dem Gehäuse (40) horizontal erstreckt,
Ballastgewichte (50), die an der Spitzenhülse (42) geometrisch derart angeordnet sind, daß ein dynamischer Trägheitsknotenausgleich erfolgt.

2. Passives aerodynamisches Druckmindersystem nach Anpruch 1, **dadurch gekennzeichnet,** daß sich die Spitzenhülse (42) von dem Oberteil (20) des Gehäuses (40) horizontal erstreckt.

3. Passives aerodynamisches Druckmindersystem nach Anspruch 1, **dadurch gekennzeichnet,** daß die Seitenwandabschnitte (22, 24) des Gehäuses (40) symmetrisch sind und im wesentlichen die Form eines Parallelogramms haben. (Figur 4)

4. Passives aerodynamisches Druckmindersystem nach Anspruch 1, **dadurch gekennzeichnet,** daß die Seitenwandabschnitte (22, 24) des Gehäuses (16) symmetrisch sind und jeder im wesentlichen eine Trapezform hat. (Figur 2)

FIG. 1

32
28
20
30
26
22
10
10
24
16
14
18
Z
Z
38
34
36
12

FIG. 2

20
28
22
16
26
AIRSTREAM
PREDETERMINED
AERODYNAMIC
CENTER
34
3
3
UPSTREAM ← → DOWNSTREAM
18

FIG. 3

30
26
34
18
32
28

FIG. 4

48

42

20

50

44

40

X AERODYNAMIC
CENTER

AIRSTREAM

46

EP 0 261 587 B1